# EUROPEAN PATENT SPECIFICATION

(11) **EP 3 932 785 B1**
(45) Date of publication and mention of the grant of the patent: **01.11.2023**
(21) Application number: 21180391.1
(22) Date of filing: 18.06.2021
(51) Int. Cl.: B62D 25/02, B62D 25/06, B62D 27/02, B62D 29/00

(54) **VEHICLE BODY STRUCTURE**
FAHRZEUGKAROSSERIESTRUKTUR
STRUCTURE DE CARROSSERIE DE VÉHICULE

(30) Priority: 01.07.2020 JP 2020113840
(43) Date of publication of application: 05.01.2022
(73) Proprietor: MAZDA MOTOR CORPORATION, Hiroshima 730-8670 (JP)
(72) Inventor: Shimanaka, Tsuneki, Aki-gun, Hiroshima, 730-8670 (JP)
(74) Representative: Laufhütte, Dieter

(56) References cited:
- EP-A1- 3 539 852
- CN-U- 210 284 375
- JP-A- 2015 151 044

## Description

The present invention relates to a vehicle body structure.

Conventionally, various structures have been available to fix both end portions in a vehicle width direction of a roof panel in a vehicle body to a pair of roof side rails.

For example, EP 3 539 852 A1 discloses a vehicle side portion structure that allows a vehicle body to be lightweight and improves yield by reducing the size of a side member outer panel. Further, CN 210 284 375 U discloses an A-pillar for a vehicle which includes the A-pillar. The A-pillar comprises a main beam made of a hollow aluminum section tubular structure and an outer plate made of carbon fiber material. Due to this structural design, the A-pillar has high strength, which generally improves the safety of the vehicle occupants. Another conventional vehicle body structure is known from JP-A-2015-151044.

In the general vehicle body structure, as disclosed in JP-A-2015-151044, a bracket that is provided to each of the paired roof side rail is joined to a flange that is provided to each of the end portions in the vehicle width direction of the roof panel by welding or the like.

More specifically, the roof panel disclosed in JP-A-2015-151044 includes: a step portion that is formed by folding each of the end portions in the vehicle width direction downward; and the flange that is formed by folding a lower end of the step portion outward in the vehicle width direction. The flange of the roof panel is superposed on the bracket, which is provided in a manner to be projected inward in the vehicle from a side surface on an inner side in the vehicle width direction of each of the paired roof side rails, from above and is welded thereto.

In the above vehicle body structure, the roof side rails are firmly fixed by superposing the flange at each of the end portions in the vehicle width direction of the roof panel to the bracket on the roof side rail side from above and welding the flange thereto. In this structure, since the step portion is provided between a roof panel body and the flange, a welded portion between the flange and the bracket is less likely to be seen from the outside. However, there is a problem that, due to presence of the step portion on each side in the vehicle width direction of the roof panel, it is difficult to improve design quality of the vehicle body.

The present invention has been made in view of the above circumstance and therefore has the object of providing a vehicle body structure capable of simultaneously achieving firm fixing between a roof panel and a roof side rail and improvement in design quality of a vehicle body.

In order to solve the above object, a vehicle body structure according to the present invention is a vehicle body structure of an automobile and includes: a pair of roof side rails that constitutes at least one closed cross section and extends in a vehicle longitudinal direction; and a roof panel that is stretched between the pair of roof side rails and extends in a vehicle width direction. The roof panel has: a body section that extends in the vehicle width direction; and a flange section that is provided to both end portions in the vehicle width direction of the body section and extends in the vehicle width direction along a lower surface of the closed cross section. The flange section is fixed to the lower surface of the closed cross section.

With such a configuration, when the flange section of the roof panel is fixed to the at least one lower surface of the closed cross section of the roof side rail, it is possible to increase strength against a tensile load that is applied to the roof panel. In addition, since the flange section is fixed to the lower surface of the closed cross section of the roof side rail, the flange section is not visually recognized from the outside, and a step portion that is provided in the conventional vehicle body structure is not formed. As a result, it is possible to simultaneously achieve firm fixing between the roof panel and the roof side rail and improvement in design quality of the vehicle body.

In the above vehicle body structure, preferably, the flange section adheres to the lower surface of the closed cross section by an adhesive and is fastened thereto by a fastener.

With such a configuration, the flange section is fixed by both of the adhesion to the lower surface of the closed cross section of the roof side rail using the adhesive and fastening using the fastener. Thus, the roof panel can further firmly be fixed to the roof side rail. That is, in this configuration, since the flange section is less likely to be detached from the lower surface of the closed cross section of the roof side rail due to fastening by the fastener, it is possible to suppress separation of the adhesive. In addition, due to the adhesion by the adhesive, the flange section is less likely to be shifted along the lower surface of the closed cross section. Thus, it is possible to prevent damage caused by concentration of stress on the flange section at a position of the fastener. Due to these synergistic effects, it is possible to further firmly fix the roof panel to the roof side rail as described above.

In the above vehicle body structure, preferably, the roof side rail is constructed of a first frame and a second frame that adheres to the first frame, each of the first frame and the second frame has a closed cross section, the closed cross section of the second frame extends in the vehicle width direction in a manner to cover the first frame and the flange section from above, the lower surface of the closed cross section of the second frame has: a first adhesive surface that adheres to an upper surface of the first frame; and a second adhesive surface that adheres to the flange section, and the first adhesive surface and the second adhesive surface are arranged on the substantially same plane.

With such a configuration, the roof side rail is constructed of the first frame and the second frame, and in the closed cross section of the second frame, the first adhesive surface and the second adhesive surface, which are arranged on the substantially same plane, adhere to the upper surface of the first frame and the flange section. In this configuration, even in the case where a load in a shearing direction that is applied to the roof panel is applied to the second frame via the second adhesive surface, which adheres to the flange section, it is possible to transmit the load applied in the shearing direction to the first frame via the first adhesive surface that is on the substantially same plane as the second adhesive surface. In this way, a load applied to the first adhesive surface in an out-of-plane direction, that is, the load that causes separation of the first adhesive surface is less likely to be generated. As a result, it is possible to increase the strength of the roof panel against the load applied in the shearing direction.

In the above vehicle body structure, preferably, the closed cross section of the second frame has an inward extending section that extends to an inner side in the vehicle width direction from a position above the first frame in the second frame, and the second adhesive surface is arranged on a lower surface of the inward extending section.

With such a configuration, the second adhesive surface, which adheres to the flange section of the roof panel, in the second frame is arranged on the lower surface of the closed cross section of the second frame, more specifically, the lower surface of the inward extending section that extends to the inner side in the vehicle width direction in the closed cross section. In this way, it is possible to support the second adhesive surface, which adheres to the flange section, by the closed cross section of the second frame and thus can secure the tensile strength of the second adhesive surface. In addition, the inward extending section of the second frame extends to the inner side in the vehicle width direction from the position above the first frame and approaches the body section of the roof panel. In this way, it is possible to reduce a clearance between the body section of the roof panel and the second frame, which improves the design quality of the vehicle body.

In the above vehicle body structure, preferably, the second frame further has a third adhesive surface that is oriented to a different direction on an outer side in the vehicle width direction of the first adhesive surface, the first frame further has a side surface that is adjacent to the upper surface, and the first adhesive surface adheres to the upper surface of the first frame, and the third adhesive surface adheres to the side surface of the first frame.

With such a configuration, not only to the first adhesive surface of the second frame but also the third adhesive surface, which is oriented in the different direction from the first adhesive surface, adhere to the first frame. Accordingly, even in the case where the load in the shearing direction, which applied to the roof panel, is applied to the second frame, such a possibility is reduced that the second frame is separated from the first frame and moves relative to the first frame.

In the above vehicle body structure, preferably, the second frame has higher tensile strength and is lighter than the first frame, and center of a figure of the second frame is arranged on an outer side in the vehicle width direction of center of a figure of the first frame with respect to vehicle center.

With such a configuration, the center of the figure of the second frame, which has the higher tensile strength and is lighter than the first frame, is arranged on the outer side in the vehicle width direction from the center of the figure of the first frame with respect to the vehicle center. In this way, the modification of the vehicle body can be suppressed while moment of inertia with respect to the vehicle center is reduced during travel of the vehicle. Thus, it is possible to simultaneously reduce weight of the vehicle body and improve steering stability of the vehicle. In addition, compared to a case where the single frame having the plural closed cross sections is formed of the same material such as aluminum, it is possible to suppress an increase in external dimensions of the first frame and the second frame formed of the different types of the materials, and it is also possible to improve freedom of design of the vehicle body.

According to the vehicle body structure of the present invention, it is possible to simultaneously achieve firm fixing between the roof panel and the roof side rail and improvement in the design quality of the vehicle body.

### Brief Description of the Drawings

Fig. 1 is a side view illustrating an overall configuration of a vehicle having a vehicle body structure according to an embodiment of the present invention.
Fig. 2 is a front view of the vehicle in Fig. 1.
Fig. 3 is a cross-sectional view that is taken along line III-III in Fig. 1.
Fig. 4 is an enlarged cross-sectional view of a left roof side rail in Fig. 3 and a periphery thereof.
Fig. 5 is an enlarged cross-sectional view of the left roof side rail in Fig. 4 and the periphery thereof in a cross section that is taken along line V-V in Fig. 1.
Fig. 6 is an enlarged cross-sectional view of a first frame and a second frame of the roof side rail and a flange section of a roof panel in Fig. 4.
Fig. 7 is a plan view illustrating a pair of the roof side rails and the roof panel of the vehicle body in Fig. 1.

A detailed description will hereinafter be made on a preferred embodiment of the present invention with reference to the accompanying drawings.

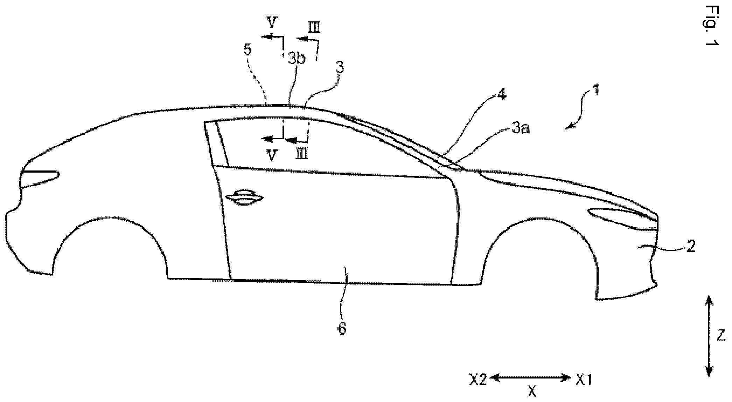

A vehicle body structure illustrated in Figs. 1 to 3 and Fig. 7 is a vehicle body structure of a vehicle 1 such as an automobile, and includes: a pair of roof side rails 3 constituting an upper portion of a vehicle body 2; a front windshield 4; a roof panel 5 that is stretched between the paired roof side rails 3 and extends in a vehicle width direction Y; and a pair of doors 6 attached to both sides of the vehicle body 2 in the vehicle width direction Y

Each of the paired roof side rails 3 has: a roof side rail body section 3b that extends in a vehicle longitudinal direction X; and a pillar section 3a that extends downward in the vehicle 1 and to a vehicle front side X1 from a front end of the roof side rail body section 3b.

The front windshield 4 is provided to cover a portion between the pillar sections 3a of the paired roof side rails 3. Each end of the front windshield 4 extends upward and to a vehicle rear side X2 along the pillar section 3a.

The roof panel 5 covers a portion between the roof side rail body sections 3b of the paired roof side rails 3 and constitutes a ceiling of the vehicle body 2. Each end of the roof panel 5 extends to the vehicle rear side X2 along the roof side rail body section 3b.

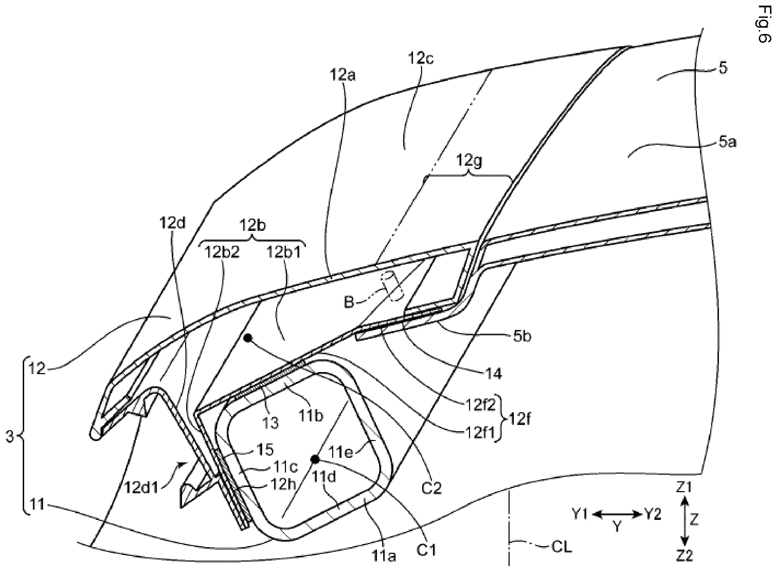

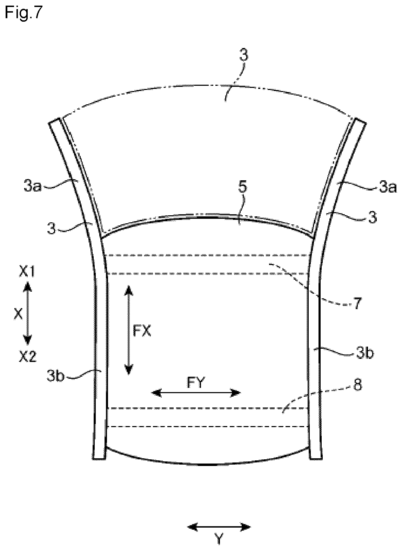

More specifically, the roof panel 5 has: a body section 5a that extends in the vehicle width direction Y; and a flange section 5b that is provided to both end portions of the body section 5a in the vehicle width direction Y and extends in the vehicle width direction Y along a lower surface 12f (see Fig. 6) of a closed cross section 12a of the roof side rail 3. As illustrated in Fig. 7, in a state where the roof panel 5 is mounted on two beams 7, 8, each of which is stretched between the paired roof side rails 3 and extends in the vehicle width direction Y, the flange sections 5b at both ends of the paired roof side rails 3 are fixed to the paired roof side rails 3.

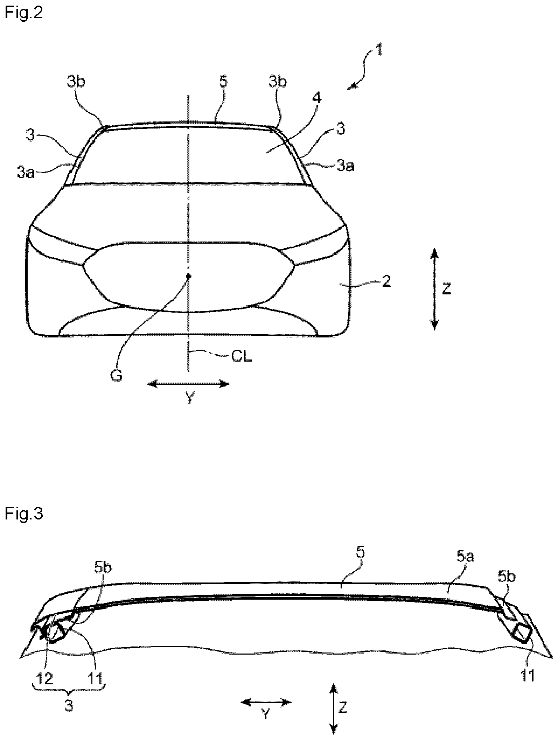

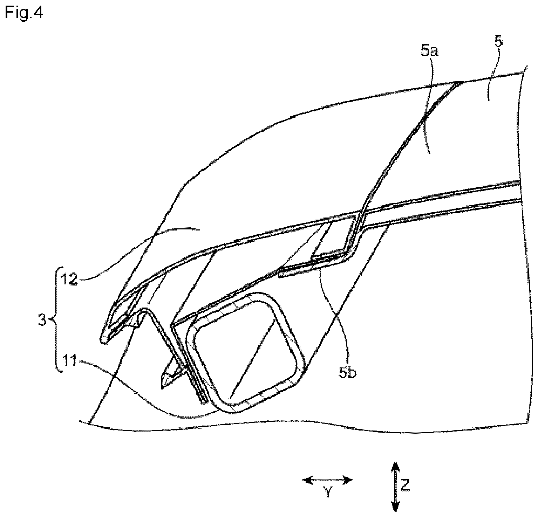

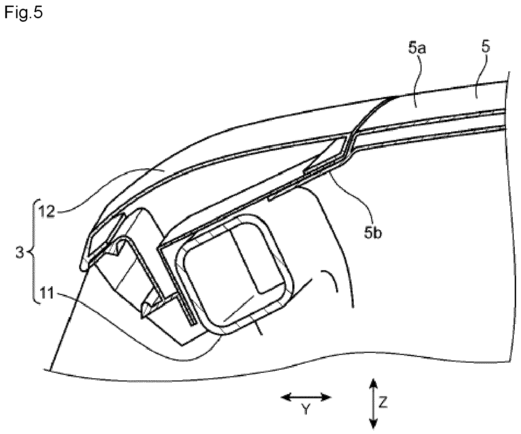

Each of the paired roof side rails 3 is constructed of a composite frame that is formed from plural types of materials. More specifically, as illustrated in Figs. 3 to 6, each of the paired roof side rails 3 is constructed of a first frame 11 and a second frame 12. The first frame 11 and the second frame 12 are aligned in the vehicle width direction Y and a vertical direction Z and extend in the vehicle longitudinal direction X.

The first frame 11 is a long cylindrical body that is formed of a first material, has a closed cross section 11a, and extends in the longitudinal direction X of the vehicle 1.

For example, the first frame 11 is manufactured by using, as the first material, a metal material such as aluminum or steel that is rigid and can be manufactured inexpensively, or the like.

The first frame 11 illustrated in Fig. 6 has a polygonal shape having plural sides 11b, 11c, 11d, 11e in a front cross-sectional view of the vehicle 1, and has a rhomboid shape in this embodiment. In other words, these sides 11b, 11c, 11d, 11e constitute the closed cross section 11a in the rhomboid shape (the polygonal shape).

The sides 11b, 11c, 11d, 11e have a first outer side 11b and a second outer side 11c as at least two outer sides with which a surface constituting an outer circumferential surface of the first frame 11 faces an outer side Y1 in the vehicle width direction. The first outer side 11b faces the outer side Y1 in the vehicle width direction of the first frame 11 and obliquely upward. The second outer side 11c faces the outer side Y1 in the vehicle width direction of the first frame 11 and obliquely downward.

Meanwhile, the second frame 12 includes at least two fixed surfaces 12b1, 12b2, which will be described below, as surfaces that can be fixed to the at least two outer sides 11b, 11c, respectively.

Accordingly, the first frame 11 has the at least two outer sides 11b, 11c, each of which faces the outer side in the vehicle width direction Y Thus, compared to a case where only one outer side is provided (for example, only the outer side 11b of the first frame 11 having a rectangular cross section faces the outer side Y1 in the vehicle width direction), it is possible to secure a large area for fixing the second frame 12 by adhesion or the like.

The second frame 12 is a long cylindrical body that is formed of a second material differing from the first material, has the closed cross section 12a, and extends in the longitudinal direction X of the vehicle 1.

For example, the second frame 12 is manufactured by using, as the second material, a reinforced fiber resin such as CFRP that is reinforced by carbon fiber or the like. Compared to the metal material such as aluminum or steel that is adopted as the above first material, the reinforced fiber resin such as the CFRP has properties of being lightweight (that is, weight per unit weight (or specific weight) is light) and having high tensile strength (further in detail, rigidity such as torsional rigidity or bending rigidity is high).

As illustrated in Fig. 6, the second frame 12 has the cylindrical shape that has the closed cross section 12a when being cut in the vehicle width direction Y of the vehicle 1. The closed cross section 12a includes a first frame fixed section 12b, an outer surface constituting section 12c, and a weather strip attachment section 12d. Each of these first frame fixed section 12b, outer surface constituting section 12c, and weather strip attachment section 12d is manufactured by using a fiber-reinforced resin material in a thin plate shape formed from the CFRP and the like. Each of the fiber-reinforced resin material in the thin plate shape is oriented such that the reinforced fiber such as the carbon fiber extends in a longitudinal direction (primarily, the vehicle longitudinal direction X) of the second frame 12. The second frame 12 having the closed cross section 12a is manufactured by joining these first frame fixed section 12b, outer surface constituting section 12c, and weather strip attachment section 12d at the time of sintering of the carbon fiber. Due to such a structure that is formed of the fiber-reinforced resin material and has the closed cross section 12a, the second frame 12 has the higher tensile strength and is lighter (that is, weight per unit weight (or specific weight) is lighter) than the first frame 11. In the front cross-sectional view of the first frame 11 and the second frame 12, center C2 of the figure of the second frame 12 is arranged on the outer side Y1 in the vehicle width direction from center C1 of the figure of the first frame 11 with respect to vehicle center CL.

Here, the "front cross-sectional view" means a cross-sectional view in which cross sections of the first frame 11 and the second frame 12 in an extending direction are seen from the front side of the vehicle. The center C1 of the figure means center (center of gravity) of the cross section in the vehicle width direction of the first frame 11. The center C2 of the figure means center (center of gravity) of the cross section in the vehicle width direction of the second frame 12.

As illustrated in Fig. 2, a position of the vehicle center CL in the vehicle width direction Y is located at center of the vehicle 1 in a vehicle front view, and is the same as center of gravity G of the vehicle 1.

The first frame fixed section 12b includes a first fixed surface 12b1 and a second fixed surface 12b2 as two fixed surfaces that can be fixed to the two outer sides 11b, 11c of the first frame 11, respectively. That is, the first fixed surface 12b1 can be fixed to the outer side 11b, and the second fixed surface 12b2 can be fixed to the outer side 11c.

The first fixed surface 12b1 and the second fixed surface 12b2 are oriented in different directions and are orthogonal to each other in this embodiment illustrated in Figs. 3 to 5.

In this embodiment, as illustrated in Fig. 6, the at least two fixed surfaces 12b1, 12b2 of the second frame 12 respectively adhere to the at least two outer sides 11b, 11c of the first frame 11.

More specifically, a first adhesive surface 12f1, which is a lower surface of the first fixed surface 12b1 and will be described below, opposes the first outer side 11b, which is an upper surface of the first frame 11 and faces the outer side Y1 in the vehicle width direction and obliquely upward, and adheres to the first outer side 11b by an adhesive 13.

A third adhesive surface 12h, which is a surface facing an inner side Y2 in the vehicle width direction of the second fixed surface 12b2 and will be described below, opposes the second outer side 11c, which faces the outer side Y1 in the vehicle width direction of the first frame 11 and obliquely downward, and adheres to the second outer side 11c by an adhesive 15.

In this embodiment, the adhesives 13, 15 are separated but may be connected.

The outer surface constituting section 12c is a portion that can be seen from the outside of the vehicle 1, and constitutes a part of a design surface of the vehicle 1.

The weather strip attachment section 12d has a fitting concave section 12d1 (see Fig. 7) that faces and is opened to the outer side Y1 in the vehicle width direction of the vehicle 1. The fitting concave section 12d1 is a groove that extends in the vehicle longitudinal direction X, and a weather strip that is formed of a long resin material can be attached thereto.

In this embodiment, since the weather strip attachment section 12d is integrally formed in the second frame 12, a bulge, a seam, or the like that is formed at the time when another member is attached is not formed. As a result, design quality of the vehicle 1 is improved.

The fixed surfaces 12b1, 12b2 may be fixed to the outer sides 11b, 11c by a method other than the adhesion such as riveting or by both of the adhesion and riveting.

As illustrated in Fig. 6, the closed cross section 12a (more specifically, the first fixed surface 12b1 of the first frame fixed section 12b) in the second frame 12 has the lower surface 12f.

The flange section 5b of the roof panel 5 is fixed to the lower surface 12f of the closed cross section 12a in the roof side rail 3.

More specifically, in a portion of the second frame 12 that extends in parallel with the roof panel 5, the closed cross section 12a has an inward extending section 12g that extends to the inner side Y2 in the vehicle width direction Y from a position in the second frame 12 above the first frame 11. That is, the first frame fixed section 12b and the outer surface constituting section 12c, which constitute the closed cross section 12a of the second frame 12, are projected to the inner side Y2 in the vehicle width direction Y from the first outer side 11b in an upper portion of the first frame 11. In this way, the inward extending section 12g of the closed cross section 12a is formed. A second adhesive surface 12f2, which will be described below, is arranged on a lower surface of the inward extending section 12g.

Meanwhile, the above flange section 5b that is projected to the outer side Y1 in the vehicle width direction Y is formed on each of the sides in the vehicle width direction Y of the roof panel 5. The flange section 5b adheres to the second adhesive surface 12f2, which is arranged on the lower surface of the inward extending section 12g in the closed cross section 12a. In this way, end portions on both of the sides of the roof panel 5 can be fixed to the paired roof rails 3.

Preferably, the flange section 5b adheres to the lower surface 12f of the closed cross section 12a by an adhesive 14 and is fastened thereto by a fastener B such as a bolt, a rivet, or the like.

In this embodiment, as illustrated in Fig. 6, the closed cross section 12a of the second frame 12 extends in the vehicle width direction Y in a manner to cover the first frame 11 and the flange section 5b from above.

The lower surface 12f of the closed cross section 12a has: the first adhesive surface 12f1 that adheres to the first outer side 11b as the upper surface of the first frame 11; and the second adhesive surface 12f2 that adheres to the flange section 5b. The first adhesive surface 12f1 and the second adhesive surface 12f2 are arranged on the substantially same plane.

As illustrated in Fig. 6, the second frame 12 further has the third adhesive surface 12h that is oriented to a different direction on the outer side Y1 in the vehicle width direction from the first adhesive surface 12f1, in this embodiment, an orthogonal direction. The first frame 11 further has the second outer side 11c that is a side surface adjacent to the first outer side 11b as an upper surface.

The first adhesive surface 12f1 adheres to the first outer side 11b as the upper surface of the first frame 11 by the adhesive 13, and the third adhesive surface 12h adheres to the second outer side 11c as a side surface of the first frame 11 by the adhesive 15.

This embodiment has the following characteristics:
(1) As illustrated Figs. 1 to 3 and Fig. 7, the vehicle body structure of the automobile according to this embodiment is the vehicle body structure of the automobile and includes: the paired roof side rails 3, each of which constitutes the at least one (two in this embodiment) each of the closed cross sections 11a, 12a and extends in the vehicle longitudinal direction X; and the roof panel 5 that is stretched between the paired roof side rails 3 and extends in the vehicle width direction Y The roof panel 5 has: the body section 5a that extends in the vehicle width direction Y; and the flange section 5b that is provided to both of the end portions of the body section 5a in the vehicle width direction Y and extends in the vehicle width direction Y along the lower surface 12f of the closed cross section 12a. The flange section 5b is fixed to the lower surface 12f of the closed cross section 12a in the roof side rail 3.
   With such a configuration, when the flange section 5b of the roof panel 5 is fixed to the lower surface 12f of the closed cross section 12a of the roof side rail 3, it is possible to increase strength against a tensile load that is applied to the roof panel 5. In addition, since the flange section 5b is fixed to the lower surface 12f of the closed cross section 12a of the roof side rail 3, the flange section 5b is not visually recognized from the outside, and the step portion that is provided in the conventional vehicle body structure is not formed. As a result, it is possible to simultaneously achieve firm fixing between the roof panel 5 and the roof side rails 3 and improvement in the design quality of the vehicle body.
(2) In the vehicle body structure of the automobile in this embodiment, as illustrated in Fig. 6, preferably, the flange section 5b adheres to the lower surface 12f of the closed cross section 12a by the adhesive 14 and is fastened thereto by the fastener B.
   With such a configuration, the flange section 5b is fixed by both of the adhesion to the lower surface 12f of the closed cross section 12a of the roof side rail 3 using the adhesive 14 and fastening using the fastener B. Thus, the roof panel 5 can further firmly be fixed to the roof side rail 3. That is, in this configuration, since the flange section 5b is less likely to be detached from the lower surface 12f of the closed cross section 12a of the roof side rail 3 due to fastening by the fastener B, it is possible to suppress separation of the adhesive 14. In addition, due to the adhesion by the adhesive 14, the flange section 5b is less likely to be shifted along the lower surface 12f of the closed cross section 12a. Thus, it is possible to prevent damage caused by concentration of stress on the flange section 5b at a position of the fastener B. Due to these synergistic effects, it is possible to further firmly fix the roof panel 5 to the roof side rail 3 as described above.
(3) In the vehicle body structure of the automobile according to this embodiment, as illustrated in Fig. 6, the roof side rail 3 is constructed of the first frame 11 and the second frame 12, which adheres to the first frame 11. The first frame 11 has the closed cross section 11a, and the second frame 12 has the closed cross section 12a. The closed cross section 12a of the second frame 12 extends in the vehicle width direction Y in the manner to cover the first frame 11 and the flange section 5b from above. The lower surface 12f of the closed cross section 12a of the second frame 12 has: the first adhesive surface 12f1 that adheres to the first outer side 11b as the upper surface of the first frame 11; and the second adhesive surface 12f2 that adheres to the flange section 5b. The first adhesive surface 12f1 and the second adhesive surface 12f2 are arranged on the substantially same plane (preferably on the same plane).

With such a configuration, the roof side rail 3 is constructed of the first frame 11 and the second frame 12. In the first adhesive surface 12f1 and the second adhesive surface 12f2, which are arranged on the substantially same plane, the closed cross section 12a of the second frame 12 adheres to the upper surface of the first frame 11 and the flange section 5b. In this configuration, even in the case where a load in a shearing direction that is applied to the roof panel 5 is applied to the second frame 12 via the second adhesive surface 12f2, which adheres to the flange section 5b, it is possible to transmit the load applied in the shearing direction to the first frame 11 via the first adhesive surface 12f1 that is on the substantially same plane as the second adhesive surface 12f2. In this way, a load applied to the first adhesive surface 12f1 in an out-of-plane direction, that is, the load that causes separation of the first adhesive surface 12f1 is less likely to be generated. As a result, it is possible to increase the strength of the roof panel 5 against the load applied in the shearing direction.

In regard to the above "substantially same plane", for example, in the case where an inclination of the second adhesive surface 12f2 with respect to the first adhesive surface 12f1 is set to be equal to or smaller than 20 degrees, the load that is applied to the adhesive surfaces 12f1, 12f2 in the shearing direction can be increased with respect to a load in the vehicle width direction Y that is transmitted from the roof panel 5 to the second frame 12. Thus, it is possible to prevent fractures of the adhesive surfaces 12f1, 12f2. Since the loads in a peeling direction on the adhesive surfaces 12f1, 12f2 are increased with an increase in the inclination, the first adhesive surface 12f1 and the second adhesive surface 12f2 are preferably on the same plane.

(4)
In the vehicle body structure of the automobile according to this embodiment, as illustrated in Fig. 6, the closed cross section 12a of the second frame 12 has the inward extending section 12g that extends to the inner side Y2 in the vehicle width direction Y from the position in the second frame 12 above the first frame 11. The second adhesive surface 12f2 is arranged on the lower surface of the inward extending section 12g.

With such a configuration, the second adhesive surface 12f2, which adheres to the flange section 5b of the roof panel 5, in the second frame 12 is arranged on the lower surface of the closed cross section 12a of the second frame 12, more specifically, the lower surface of the inward extending section 12g that extends to the inner side Y2 in the vehicle width direction Y in the closed cross section 12a. In this way, it is possible to support the second adhesive surface 12f2, which adheres to the flange section 5b, by the closed cross section 12a of the second frame 12 and thus can secure the tensile strength of the second adhesive surface 12f2. In addition, the inward extending section 12g of the second frame 12 extends to the inner side Y2 in the vehicle width direction Y from the position above the first frame 11 and approaches the body section 5a of the roof panel. In this way, it is possible to reduce a clearance between the body section 5a of the roof panel and the second frame 12, which improves the design quality of the vehicle body.

(5)
As illustrated in Fig. 6, in the vehicle body structure of the automobile according to this embodiment, the second frame 12 further has the third adhesive surface 12h, which is oriented to the different direction on the outer side Y1 in the vehicle width direction from the first adhesive surface 12f1. The first frame 11 further has the second outer side 11c that is the side surface adjacent to the first outer side 11b as the upper surface. The first adhesive surface 12f1 adheres to the first outer side 11b as the upper surface of the first frame 11, and the third adhesive surface 12h adheres to the second outer side 11c as the side surface of the first frame 11.

With such a configuration, not only to the first adhesive surface 12f1 of the second frame 12 but also the third adhesive surface 12h, which is oriented in the different direction from the first adhesive surface 12f1, adhere to the first frame 11. Accordingly, even in the case where the load in the shearing direction, which applied to the roof panel 5, is applied to the second frame 12, such a possibility is reduced that the second frame 12 is separated from the first frame 11 and moves relative to the first frame 11.

(6)
In the vehicle body structure of the automobile according to this embodiment, the second frame 12 has the higher tensile strength and is lighter than the first frame 11. The center C2 of the figure of the second frame 12 is arranged on the outer side Y1 in the vehicle width direction from the center C1 of the drawing of the first frame 11 with respect to vehicle center CL.

With such a configuration, the center C2 of the figure of the second frame 12, which has the higher tensile strength and is lighter than the first frame 11, is arranged on the outer side Y1 in the vehicle width direction from the center C1 of the figure of the first frame 11 with respect to the vehicle center CL. In this way, the modification of the vehicle body can be suppressed while moment of inertia with respect to the vehicle center CL is reduced during travel of the vehicle 1. Thus, it is possible to simultaneously reduce weight of the vehicle body and improve steering stability of the vehicle 1. In addition, compared to a case where the single frame having the plural closed cross sections is formed of the same material such as aluminum, it is possible to suppress an increase in external dimensions of the first frame 11 and the second frame 12 formed of the different types of the materials, and it is also possible to improve the freedom of the design of the vehicle body.

In other words, it is possible to reduce the moment of inertia of the vehicle body with respect to the vehicle center CL by arranging the second frame 12, which is the lightweight member, away from the vehicle center CL. In addition, since the second frame 12 is located away from the vehicle center CL, cross-sectional secondary moment of the second frame 12 with respect to the vehicle center CL is increased. Furthermore, since the tensile strength of the second frame 12 is high, it is possible to suppress torsional deformation of the vehicle body and to improve the steering stability.

The second frame 12 is fixed to the side surface on the outer side Y1 in the vehicle width direction of the first frame 11, extends to the inner side Y2 in the vehicle width direction along the upper surface of the first frame 11, and is coupled to the roof panel 5. In this way, it is possible to reliably transmit the load that is applied to the roof panel 5 to the first frame 11 and the second frame 12.

### Description of Reference Signs and Numerals

1 vehicle
2 vehicle body
3 roof side rail
4 front windshield
5 roof panel
5b flange section
6 door
11 first frame
11a, 12a closed cross section
11b first outer side (upper surface)
11c second outer side (side surface)
12 second frame
12f lower surface
12f1 first adhesive surface
12f2 second adhesive surface
12g inward extending section
12h third adhesive surface
13, 14, 15 adhesive
B fastening tool

## Claims

1. A vehicle body (2) structure of an automobile, the vehicle body structure comprising:
a pair of roof side rails (3) that constitutes at least one closed cross section (11a, 12a) and extends in a vehicle longitudinal direction /X); and
a roof panel (5) that is stretched between the pair of roof side rails (3) and extends in a vehicle width direction (Y), wherein
the roof panel (5) has: a body section (5a) that extends in the vehicle width direction (Y); and a flange section (5b) that is provided to both end portions in the vehicle width direction (Y) of the body section (5a) and extends in the vehicle width direction (Y) along a lower surface (12f) of the closed cross section(12a), and
the flange section (5b) is fixed to the lower surface (12f) of the closed cross section (12a).

2. The vehicle body (2) structure according to claim 1, wherein
the flange section (5b) adheres to the lower surface (12f) of the closed cross section (12a) by an adhesive (14) and is fastened thereto by a fastener (B).

3. The vehicle body structure according to claim 1, wherein
the roof side rail (3) is constructed of a first frame (11) and a second frame (12) that adheres to said first frame (11),
each of the first frame (11) and the second frame (12) has a closed cross section (11a, 12a).

4. The vehicle body structure according to claim 3, wherein the closed cross section (12a) of the second frame (12) extends in the vehicle width direction (Y) in a manner to cover the first frame (11) and the flange section (5b) from above.

5. The vehicle body structure according to claim 4, wherein
the lower surface (12f) of the closed cross section (12a) of the second frame (12) has: a first adhesive surface (12f1) that adheres to an upper surface (11b) of the first frame (11); and a second adhesive surface (12f2) that adheres to the flange section (5b), and
the first adhesive surface (12f1) and the second adhesive surface (12f2) are arranged on the substantially same plane.

6. The vehicle body structure according to any one of claims 3 to 5, wherein
the closed cross section (12a) of the second frame (12) has an inward extending section (12g) that extends to an inner side (Y2) in the vehicle width (Y) direction from a position above the first frame in the second frame (12), and
the second adhesive surface (12f2) is arranged on a lower surface of the inward extending section (12g).

7. The vehicle body structure according to any one of claims 3 to 6, wherein
the second frame (12) further has a third adhesive surface (12h) that is oriented to a different direction on an outer side (Y1) in the vehicle width direction of the first adhesive surface (12f1),
the first frame (11) further has a side surface (11c) that is adjacent to the upper surface (11b), and
the first adhesive surface (12f1) adheres to the upper surface (11b) of the first frame (11), and the third adhesive surface (12h)adheres to the side surface (11c) of the first frame (11).

8. The vehicle body structure according to any one of claims 3 to 7, wherein
the second frame (12) has higher tensile strength and is lighter than the first frame (11), and
center (C2) of a figure of the second frame (12) is arranged on an outer side (Y1) in the vehicle width direction of center (C1) of a figure of the first frame (11) with respect to vehicle center. (CL).

9. The vehicle body structure according to any one of claims 3 to 7, wherein
a front windshield (4) is provided to cover a portion between the pillar sections (3a) of the paired roof side rails (3).

10. The vehicle body structure according to claim 9, wherein each end of the
front windshield (4) extends upward and to a vehicle rear side (X2) along the pillar section (3a).

11. The vehicle body structure according to any one of claims 3 to 10, wherein
the first frame (11) is manufactured by using as the first material, a metal material such as aluminum or steel.

12. The vehicle body structure according to any one of claims 3 to 10, wherein
the second frame (12) is manufactured by using as the second material, a reinforced fiber resin such as a resin reinforced by carbon fibers (CFRP).

13. The vehicle body structure according any one of claims 1 to 12, wherein
the closed cross section (12a) includes a first frame fixed section (12b), an outer surface constituting section (12c), and a weather strip attachment section (12d).

14. The vehicle body structure according to claim 13, wherein the first frame fixed section (12b), outer surface constituting section (12c), and a weather strip attachment section (12d) is manufactured by using a fiber-reinforced resin material in a thin plate shape.

15. The vehicle body structure according to claim 14, wherein the fiber-reinforced resin material in the thin plate shape is oriented such that the reinforced fibers such as the carbon fibers extend in the vehicle longitudinal direction (X) of the second frame (12).

## Patentansprüche

1. Fahrzeugkarosseriestruktur (2) eines Kraftfahrzeugs, wobei die Fahrzeugkarosseriestruktur aufweist:
ein Paar Dachseitenschienen (3), das mindestens einen geschlossenen Querschnitt (11a, 12a) bildet und sich in einer Fahrzeuglängsrichtung (X) erstreckt; und
ein Dachpaneel (5), das zwischen dem Paar Dachseitenschienen (3) gestreckt ist und sich in einer Fahrzeugbreitenrichtung (Y) erstreckt, wobei
das Dachpaneel (5) Folgendes aufweist: einen Karosserieabschnitt (5a), der sich in der Fahrzeugbreitenrichtung (Y) erstreckt; und einen Flanschabschnitt (5b), der an beiden Endabschnitten in der Fahrzeugbreitenrichtung (Y) des Karosserieabschnitts (5a) bereitgestellt ist und sich in der Fahrzeugbreitenrichtung (Y) entlang einer unteren Fläche (12f) des geschlossenen Querschnitts (12a) erstreckt; und
der Flanschabschnitt (5b) an der unteren Fläche (12f) des geschlossenen Querschnitts (12a) fixiert ist.

2. Fahrzeugkarosseriestruktur (2) nach Anspruch 1, wobei
der Flanschabschnitt (5b) an der unteren Fläche (12f) des geschlossenen Querschnitts (12a) durch einen Klebstoff (14) haftet und durch ein Befestigungselement (B) daran befestigt ist.

3. Fahrzeugkarosseriestruktur nach Anspruch 1, wobei
die Dachseitenschiene (3) aus einem ersten Rahmen (11) und einem zweiten Rahmen (12), der an dem ersten Rahmen (11) haftet, konstruiert ist,
jeder des ersten Rahmens (11) und des zweiten Rahmens (12) einen geschlossenen Querschnitt (11a, 12a) aufweist.

4. Fahrzeugkarosseriestruktur nach Anspruch 3, wobei sich der geschlossene Querschnitt (12a) des zweiten Rahmens (12) in der Fahrzeugbreitenrichtung (Y) auf eine Art erstreckt, um den ersten Rahmen (11) und den Flanschabschnitt (5b) von oben abzudecken.

5. Fahrzeugkarosseriestruktur nach Anspruch 4, wobei
die untere Fläche (12f) des geschlossenen Querschnitts (12a) des zweiten Rahmens (12) Folgendes aufweist: eine erste Haftfläche (12f1), die an einer oberen Fläche (11b) des ersten Rahmens (11) haftet; und eine zweite Haftfläche (12f2), die an dem Flanschabschnitt (5b) haftet, und
die erste Haftfläche (12f1) und die zweite Haftfläche (12f2) im Wesentlichen auf derselben Ebene angeordnet sind.

6. Fahrzeugkarosseriestruktur nach einem der Ansprüche 3 bis 5, wobei
der geschlossene Querschnitt (12a) des zweiten Rahmens (12) einen sich nach innen erstreckenden Abschnitt (12g) aufweist, der sich zu einer Innenseite (Y2) in der Richtung der Fahrzeugbreite (Y) von einer Position oberhalb des ersten Rahmens in dem zweiten Rahmen (12) erstreckt, und
die zweite Haftfläche (12f2) auf einer unteren Fläche des sich nach innen erstreckenden Abschnitts (12g) angeordnet ist.

7. Fahrzeugkarosseriestruktur nach einem der Ansprüche 3 bis 6, wobei
der zweite Rahmen (12) ferner eine dritte Haftfläche (12h) aufweist, die in eine andere Richtung auf einer Außenseite (Y1) in der Fahrzeugbreitenrichtung der ersten Haftfläche (12f1) ausgerichtet ist,
der erste Rahmen (11) ferner eine Seitenfläche (11c) aufweist, die benachbart zu der oberen Fläche (11b) ist, und
die erste Haftfläche (12f1) an der oberen Fläche (11b) des ersten Rahmens (11) haftet und die dritte Haftfläche (12h) an der Seitenfläche (11c) des ersten Rahmens (11) haftet.

8. Fahrzeugkarosseriestruktur nach einem der Ansprüche 3 bis 7, wobei
der zweite Rahmen (12) eine höhere Zugkraft aufweist und leichter als der erste Rahmen (11) ist, und
der Mittelpunkt (C2) einer Figur des zweiten Rahmens (12) auf einer Außenseite (Y1) in der Fahrzeugbreitenrichtung des Mittelpunkts (C1) einer Figur des ersten Rahmens (11) in Bezug auf den Fahrzeugmittelpunkt (CL) angeordnet ist.

9. Fahrzeugkarosseriestruktur nach einem der Ansprüche 3 bis 7, wobei
eine Windschutzscheibe (4) bereitgestellt ist, um einen Abschnitt zwischen den Leistenabschnitten (3a) des Paars Dachseitenschienen (3) abzudecken.

10. Fahrzeugkarosseriestruktur nach Anspruch 9, wobei sich jedes Ende der Windschutzscheibe (4) nach oben und zu einer Fahrzeughinterseite (X2) entlang des Leistenabschnitts (3a) erstreckt.

11. Fahrzeugkarosseriestruktur nach einem der Ansprüche 3 bis 10, wobei
der erste Rahmen (11) durch Verwenden als erstes Material eines Metallmaterials, wie etwa Aluminium oder Stahl, hergestellt ist.

12. Fahrzeugkarosseriestruktur nach einem der Ansprüche 3 bis 10, wobei
der zweite Rahmen (12) durch Verwenden als zweites Material eines faserverstärkten Harzes, wie etwa eines durch Kohlenstofffaser verstärkten Harzes (CFRP), hergestellt ist.

13. Fahrzeugkarosseriestruktur nach einem der Ansprüche 1 bis 12, wobei
der geschlossene Querschnitt (12a) einen ersten fixierten Rahmenabschnitt (12b), einen Außenflächenbildungsabschnitt (12c) und einen Dichtungsstreifenbefestigungsabschnitt (12d) beinhaltet.

14. Fahrzeugkarosseriestruktur nach Anspruch 13, wobei der erste fixierte Rahmenabschnitt (12b), der Außenflächenbildungsabschnitt (12c) und ein Dichtungsstreifenbefestigungsabschnitt (12d) durch Verwenden eines faserverstärkten Harzmaterials in einer dünnen Plattenform hergestellt sind.

15. Fahrzeugkarosseriestruktur nach Anspruch 14, wobei das faserverstärkte Harzmaterial in der dünnen Plattenform so ausgerichtet ist, dass sich die verstärkten Fasern, wie etwa die Kohlenstofffasern, in der Fahrzeuglängsrichtung (X) des zweiten Rahmens (12) erstrecken.

## Revendications

1. Structure de carrosserie (2) d'une automobile, la structure de carrosserie comprenant :
un paire de brancards latéraux (3) de toit constituant au moins une section transversale fermée (11a, 12a) et s'étendant dans une direction longitudinale (X) du véhicule ; et
un panneau (5) de toit se déployant entre la paire de brancards latéraux (3) de toit et s'étendant dans une direction transversale (Y) du véhicule,
le panneau (5) de toit comportant : une section corps (5a) s'étendant dans la direction transversale (Y) du véhicule ; et une section bride (5b) disposé sur les deux parties d'extrémité, dans la direction transversale (Y) du véhicule, de la section corps (5a) et s'étendant, dans la direction transversale (Y) du véhicule, le long d'une surface inférieure (12f) de la section transversale fermée (12a), et
la section bride (5b) étant fixée à la surface inférieure (12f) de la section transversale fermée (12a).

2. La structure de carrosserie (2) selon la revendication 1, dans laquelle
la section bride (5b) adhère à la surface inférieure (12f) de la section transversale fermée (12a) au moyen d'un adhésif (14) et est fixée à ladite surface à l'aide d'un élément de fixation (B).

3. La structure de carrosserie selon la revendication 1, dans laquelle
le brancard latéral (3) de toit est construit à partir d'un premier cadre (11) et d'un second cadre (12) adhérant audit premier cadre (11),
chaque cadre, parmi le premier cadre (11) et le second cadre (12), présente une section transversale fermée (11a, 12a).

4. La structure de carrosserie selon la revendication 3, dans laquelle la section transversale fermée (12a) du second cadre (12) s'étend dans la direction transversale (Y) du véhicule de manière à recouvrir le premier cadre (11) et la section bride (5b) à partir du dessus.

5. La structure de carrosserie selon la revendication 4, dans laquelle
la surface inférieure (12f) de la section transversale fermée (12a) du second cadre (12) comporte : une première surface adhésive (12f1) adhérant à une surface supérieure (11b) du premier cadre (11) ; et une deuxième surface adhésive (12f2) adhérant à la section bride (5b), et
la première surface adhésive (12f1) et la deuxième surface adhésive (12f2) sont disposées sensiblement sur le même plan.

6. La structure de carrosserie selon l'une quelconque des revendications 3 à 5, dans laquelle
la section transversale fermée (12a) du second cadre (12) comporte une section s'étendant vers l'intérieur (12g) qui s'étend vers un côté interne (Y2), dans la direction transversale (Y) du véhicule, à partir d'une position au-dessus du premier cadre dans le second cadre (12), et
la deuxième surface adhésive (12f2) est disposée sur une surface inférieure de la section s'étendant vers l'intérieur (12g).

7. La structure de carrosserie selon l'une quelconque des revendications 3 à 6, dans laquelle
le second cadre (12) comporte en outre une troisième surface adhésive (12h) orientée vers une direction différente sur un côté externe (Y1), dans la direction transversale du véhicule, de la première surface adhésive (12f1),
le premier cadre (11) comporte en outre une surface latérale (11c) adjacente à la surface supérieure (11b), et
la première surface adhésive (12f1) adhère à la surface supérieure (11b) du premier cadre (11), et la troisième surface adhésive (12h) adhère à la surface latérale (11c) du premier cadre (11).

8. La structure de carrosserie selon l'une quelconque des revendications 3 à 7, dans laquelle
le second cadre (12) présente une résistance à la traction supérieure, et est plus léger, par rapport au premier cadre (11), et
le centre (C2) d'une forme du second cadre (12) est disposé sur un côté externe (Y1), dans la direction transversale du véhicule, du centre (C1) d'une forme du premier cadre (11) par rapport au centre (CL) du véhicule.

9. La structure de carrosserie selon l'une quelconque des revendications 3 à 7, dans laquelle
un pare-brise avant (4) est prévu pour recouvrir une partie entre les sections montant (3a) de la paire de brancards latéraux (3) de toit.

10. La structure de carrosserie selon la revendication 9, dans laquelle chaque extrémité du pare-brise avant (4) s'étend vers le haut et vers un côté arrière (X2) du véhicule le long de la section montant (3a).

11. La structure de carrosserie selon l'une quelconque des revendications 3 à 10, dans laquelle
le premier cadre (11) est fabriqué au moyen de l'utilisation, en tant que premier matériau, d'un matériau métallique tel que de l'aluminium ou de l'acier.

12. La structure de carrosserie selon l'une quelconque des revendications 3 à 10, dans laquelle
le second cadre (12) est fabriqué au moyen de l'utilisation, en tant que second matériau, d'une résine renforcée par des fibres, telle qu'une résine renforcée par des fibres de carbone (CFRP).

13. La structure de carrosserie selon l'une quelconque des revendications 1 à 12, dans laquelle
la section transversale fermée (12a) comprend une section (12b) fixée au premier cadre, une section (12c) constituant une surface externe et une section (12d) de fixation de bande d'étanchéité.

14. La structure de carrosserie selon la revendication 13, dans laquelle la section (12b) fixée au premier cadre, la section (12c) constituant une surface externe et la section (12d) de fixation de bande d'étanchéité sont fabriquées à l'aide de l'utilisation d'un matériau de résine renforcée par des fibres sous forme de plaque mince.

15. La structure de carrosserie selon la revendication 14, dans laquelle le matériau de résine renforcée par des fibres, sous forme de plaque mince, est orienté de sorte que les fibres de renforcement, telles que des fibres de carbone, s'étendent dans la direction longitudinale (X), par rapport au véhicule, du second cadre (12).
